# EUROPEAN PATENT SPECIFICATION

(11) **EP 2 685 045 B1**
(45) Date of publication and mention of the grant of the patent: **13.09.2017**
(21) Application number: 13175116.6
(22) Date of filing: 04.07.2013
(51) Int. Cl.: E06B 9/24, E06B 9/386, G02B 5/20

(54) **Slat blind having optically coated lamellae**
Fensterbehang mit optisch beschichteten Lamellen
Store comprenant des lamelles à revêtement optique

(30) Priority: 10.07.2012 TW 101124832
(43) Date of publication of application: 15.01.2014
(73) Proprietor: Inoma Corporation, Taiwan (R.O.C.) (TW)
(72) Inventor: Yeh, Chia Chang, 71758 Rende Dist., Tainan City (TW); Lin, Hsin-Yung, 71758 Rende Dist., Tainan City (TW); Lin, Chi-Wen, 71758 Rende Dist., Tainan City (TW); Su, Ying-Chang, 71758 Rende Dist., Tainan City (TW)
(74) Representative: 2K Patentanwälte Blasberg Kewitz & Reichel

(56) References cited:
- WO-A1-2011/096595
- DE-A1-102004 030 086

## Description

### BACKGROUND OF THE INVENTION

### 1. Field of the Invention

The present invention relates to a window shutter apparatus and architectural optical assemblies thereof, and more particularly to a window shutter apparatus and architectural optical assemblies thereof that can change the incident light beam.

### 2. Description of the Related Art

The conventional light-guiding apparatus is of various types, one of which is a film having microstructures. The film is disposed on or near a window of a room and used for guiding the sunlight beams outside the room into the room. The sunlight beams are directed to illuminate a reflector on the ceiling in the room. Then, the sunlight beams are reflected by the reflector, and used for indoor lighting or auxiliary illumination.

However, the light-guiding apparatus of the film having microstructures only has a single light-guiding function. If the light-guiding function is not necessary, the usage of such light-guiding apparatus is limited.

Therefore, it is necessary to provide a window shutter apparatus and architectural optical assemblies thereof to solve the above problem.

DE 10 2004 030086 A1 and WO 2011/096595A1 disclose different types of architectural optical assemblies with light shielding elements.

### SUMMARY OF THE INVENTION

The present invention is directed to an architectural optical assembly used for receiving light beam according to the independent claim 1. The architectural optical assembly comprises a discolorable element and a light-shielding element. The discolorable element is used for receiving the light beam to exhibit discoloration effect. The light-shielding element is disposed adjacent to the discolorable element and used for shielding a part of the light beam having a wavelength within a predetermined range. Thereby, the architectural optical assembly has both light-shielding effect and light-transmitting effect.

The present invention is further directed to a window shutter apparatus for receiving light beam. The window shutter apparatus comprises a plurality of seats, a plurality of architectural optical assemblies and a controlling apparatus. Each of the architectural optical assemblies is disposed on each of the seats, and comprises a discolorable element and a light-shielding element. The discolorable element is used for receiving the light beam to exhibit discoloration effect. The light-shielding element is disposed adjacent to the discolorable element and used for shielding a part of the light beam having a wavelength within a predetermined range. The controlling apparatus is used for controlling the rotation of the seats. Thereby, the window shutter apparatus has both light-shielding effect and light-transmitting effect.

### BRIEF DESCRIPTION OF THE DRAWINGS

FIG. 1 is a cross-sectional view of an architectural optical assembly for better understanding the present invention.
FIG. 2 is a cross-sectional view of an architectural optical assembly for better understanding the present invention.
FIG. 3 is a cross-sectional view of an architectural optical assembly according to an embodiment of the present invention.
FIG. 4 is a perspective view of a light-guiding film according to an embodiment of the present invention.
FIG. 5 is a side view of the light-guiding film of FIG. 5.
FIG. 6 is a partially enlarged view of FIG. 5.
FIG. 7 is a cross-sectional view of an architectural optical assembly according to another embodiment of the present invention.
FIG. 8 is a cross-sectional view of an architectural optical assembly according to another embodiment of the present invention.
FIG. 9 is a perspective view of a window shutter apparatus according to an embodiment of the present invention.
FIG. 10 is a perspective exploded view of a first plate of a window shutter apparatus according to an embodiment of the present invention.
FIG. 11 is a perspective assembly view of a first plate of a window shutter apparatus according to an embodiment of the present invention.
FIG. 12 is a first operation of the window shutter apparatus of FIG. 9.
FIG. 13 is a second operation of the window shutter apparatus of FIG. 9.
FIG. 14 is a perspective view of a window shutter apparatus according to another embodiment of the present invention.
FIG. 15 is a perspective exploded view a first plate of a window shutter apparatus according to another embodiment of the present invention.

### DETAILED DESCRIPTION OF THE INVENTION

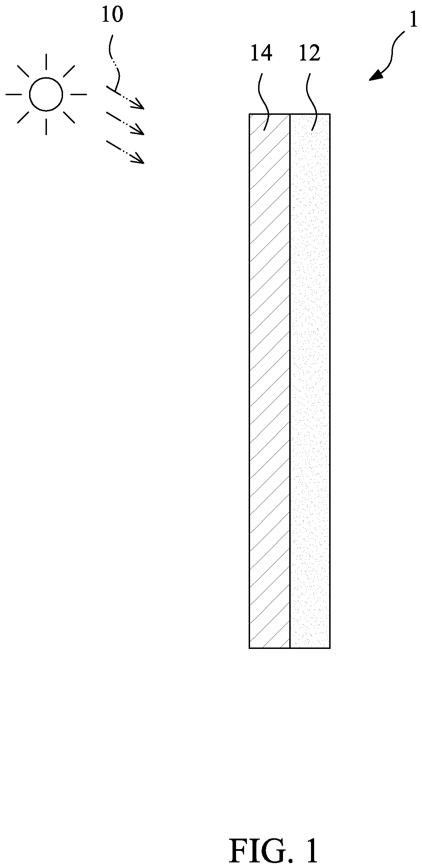

FIG. 1 shows a cross-sectional view of an architectural optical assembly for better understanding the present invention. The architectural optical assembly 1 is used for receiving light beam 10 and comprises a discolorable element 12 and a light-shielding element 14. The discolorable element 12 is used for receiving the light beam 10 to exhibit discoloration effect. The light-shielding element 14 is disposed adjacent to the discolorable element 12 and used for shielding a part of the light beam 10 having a wavelength within a predetermined range.

The light beam 10 is the sunlight beam, and at least has visible light and ultraviolet (UV) light. The discolorable element 12 is a UV-photochromic film or a thermochromic film, which includes a film base and an additive agent. The material of the film base is, e.g., polymethyl methacrylate (PMMA), arcylic-based polymer, polycarbonate (PC), polyethylene terephthalate (PET), polystyrene (PS), or a copolymer thereof. The additive agent is dispersed in the filem base, and the material thereof is, e.g., UV-activated photochromic dye, UV-activated photochromic powder, UV-activated photochromic ink, thermochromic dye, thermochromic powder or thermochromic ink. The discolorable element 12 is a UV-photochromic film. That is, when the discolorable element 12 is not illuminated by any ultraviolet (UV) light, it is transparent, whereas when the discolorable element 12 is illuminated by ultraviolet (UV) light, it will absorb the ultraviolet (UV) light to exhibit discoloration effect (becomes dark), so as to block or shield light transmission, and has the light-shielding effect.

The light-shielding element 14 is an anti-ultraviolet (UV) light film. The light beam having a wavelength within a predetermined range is ultraviolet (UV) light. Preferably, the light-shielding element 14 can shield more than 60% of ultraviolet (UV) light, and let other light pass through it. The discolorable element 12 and the light-shielding element 14 are the films formed individually, and then combined together to form the architectural optical assembly 1. However, in other embodiment, the light-shielding element 14 is attached to the discolorable element 12 by, e.g., coating or bonding, to form a single film. Alternatively, the discolorable element 12 may be attached to the light-shielding element 14 by, e.g., coating or bonding, to form a single film.

As shown in FIG. 1, the light-shielding element 14 faces the light beam 10. Meanwhile, the light-shielding element 14 shields the ultraviolet (UV) light of the light beam 10, and let other light (e.g., visible light) pass through. At the same time, since the discolorable element 12 is not illuminated by ultraviolet (UV) light, it is transparent. Therefore, the architectural optical assembly 1 is light-transmissive. That is, the visible light of the light beam 10 can pass through the light-shielding element 14 and the discolorable element 12 and then reaches the right side of the figure, and the ultraviolet (UV) light will not reach the right side of the figure (or only less ultraviolet (UV) light reaches the right side of the figure).

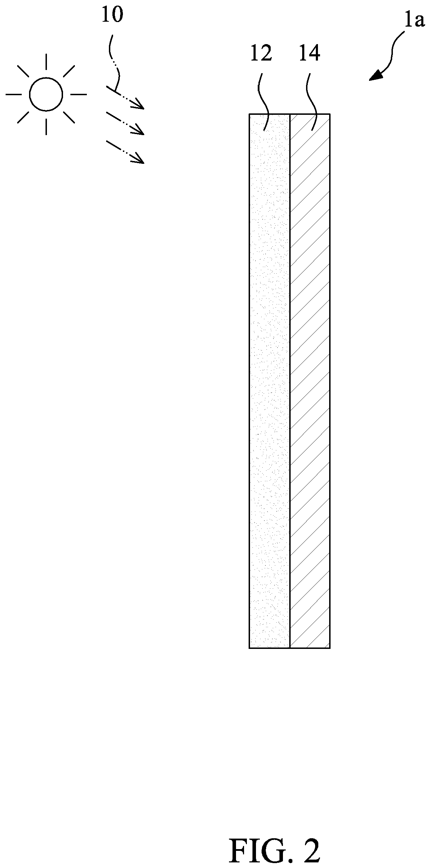

FIG. 2 shows a cross-sectional view of an architectural optical assembly for better understanding the present invention. The architectural optical assembly 1a of this embodiment is similar to the architectural optical assembly 1 of FIG. 1, wherein the same elements are designated with the same reference numerals, and the difference is described as follows. The discolorable element 12 of the architectural optical assembly 1a faces the light beam 10. Meanwhile, the discolorable element 12 is illuminated by the ultraviolet (UV) light of the light beam 10, it absorbs the ultraviolet (UV) light to exhibit discoloration effect (becomes dark), so as to block or shield the transmission of other light (e.g., visible light), or block or shield a part of the visible light. Therefore, the architectural optical assembly 1a is opaque. That is, the light beam 10 can not pass through the discolorable element 12 and the light-shielding element 14 to reach the right side of the figure (or only less light beam 10 reaches the right side of the figure). Meanwhile, the architectural optical assembly 1a has light-shielding effect. The difference between the architectural optical assembly 1a and the architectural optical assembly 1 of FIG. 1 is only the 180-degree turnover. Therefore, the architectural optical assemblies 1, 1a have both light-shielding effect and light-transmitting effect.

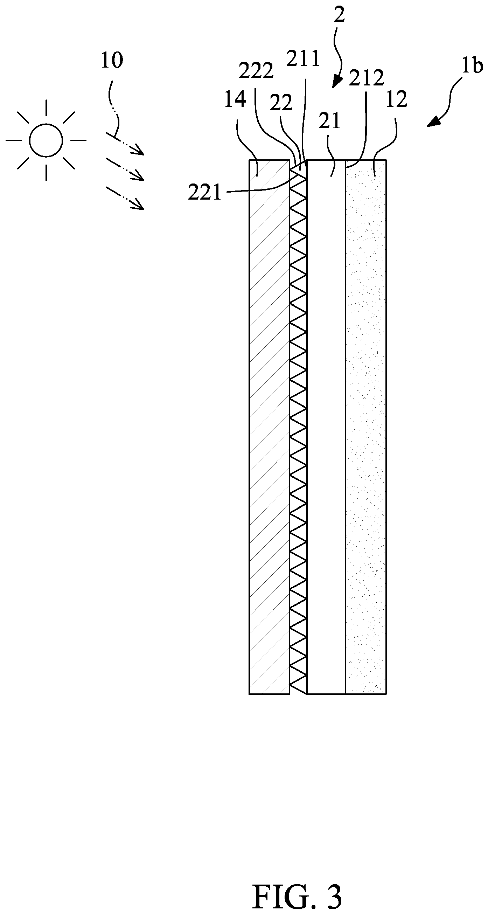

FIG. 3 shows a cross-sectional view of an architectural optical assembly according to an embodiment of the present invention. The architectural optical assembly 1b of this embodiment is similar to the architectural optical assembly 1 of FIG. 1, wherein the same elements are designated with the same reference numerals, and the difference is described as follows. In this embodiment, the architectural optical assembly 1b further comprises a light-guiding film 2 disposed between the discolorable element 12 and the light-shielding element 14.

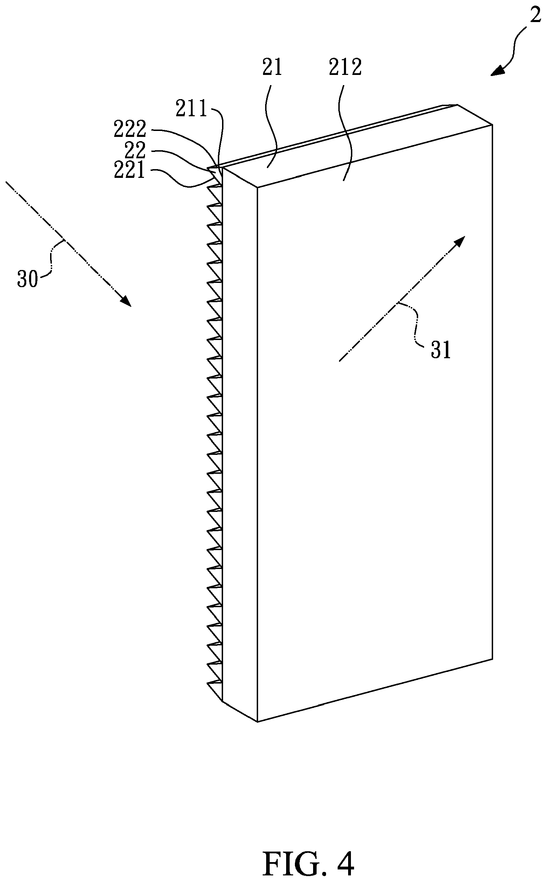

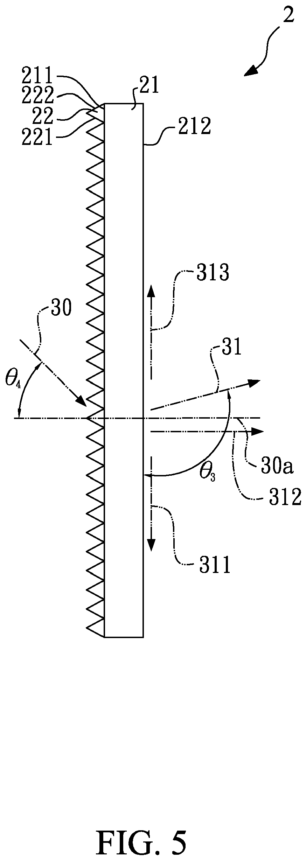

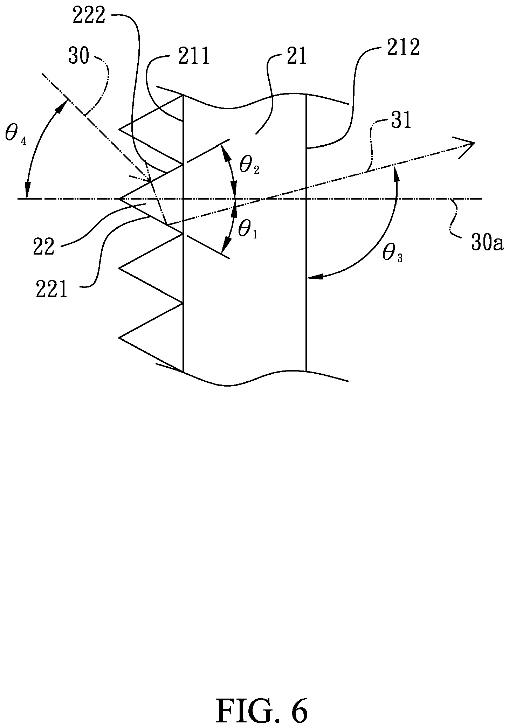

FIG. 4 shows a perspective view of a light-guiding film according to an embodiment of the present invention. FIG. 5 shows a side view of the light-guiding film of FIG. 5. FIG. 6 shows a partially enlarged view of FIG. 5. The light-guiding film 2 comprises a film base 21 and at least one microstructure 22. In this embodiment, the light-guiding film 2 comprises a plurality of microstructures 22. The film base 21 has a first side 211 and a second side 212, and the second side 212 is opposite the first side 211.

The microstructure 22 is disposed on the first side 211 or the second side 212 of the film base 21, and has a first surface 221 and a second surface 222. The second surface 222 is above the first surface 221. In this embodiment, the cross section of the microstructure 22 is substantially triangle, and the first surface 221 intersects the second surface 222.

A reference plane 30a is defined as a phantom plane that is perpendicular to the first side 211 or the second side 212 of the film base 21. That is, when the light-guiding film 2 stands upright, the reference plane 30a is a phantom horizontal plane. A first inclination angle θ₁ (FIG. 6) is between the first surface 221 and the reference plane 30a. A second inclination angle θ₂ (FIG. 6) is between the second surface 222 and the reference plane 30a, wherein the first inclination angle θ₁ is less than or equal to the second inclination angle θ₂.

As shown in FIG. 6, in this embodiment, the value of the first inclination angle θ₁ is between 11 to 19 degrees, the value of the second inclination angle θ₂ is between 52 to 68 degrees, and the sum of the first inclination angle θ₁ and the second inclination angle θ₂ is between 63 to 87 degrees. Preferably, the value of the first inclination angle θ₁ is 15 degrees, and the value of the second inclination angle θ₂ is 60 degrees.

The material of the film base 21 may be different from that of the microstructure 22. The film base 21 is made of light transmissive material, such as polymethyl methacrylate (PMMA), arcylic-based polymer, polycarbonate (PC), polyethylene terephthalate (PET), polystyrene (PS), or a copolymer thereof, with a refraction index of 1.35 to 1.65.

The microstructure 22 is made of metal oxide, such as TiO₂ or Ta₂O₅, with a refraction index of 1.9 to 2.6. In one embodiment, a layer of the metal oxide is formed on the film base 21, then, the microstructure 22 is formed by etching. It is understood that the material of the film base 21 may be same as that of the microstructure 22.

In this embodiment, a plurality of incident light beams 30 becomes a plurality of output light beams 31 after passing through the light-guiding film 2. As shown in FIG. 5 , an output angle θ₃ is defined as the angle between the output light beam 31 and the light-guiding film 2. The output angle θ₃ is defined as 0 degree when the output light beam (i.e., the output light beam 311) is downward and parallel with the light-guiding film 2. The output angle θ₃ is defined as 90 degrees when the output light beam (i.e., the output light beam 312) is horizontal and parallel with the reference plane 30a. The output angle θ₃ is defined as 180 degrees when the output light beam (i.e., the output light beam 313) is upward and parallel with the light-guiding film 2.

An incident angle θ₄ is defined as the angle between the incident light beam 30 and the reference plane 30a. The incident angle θ₄ is defined as positive value when the incident light beam 30 is downward. The incident angle θ₄ is defined as 0 degree when the incident light beam (not shown) is horizontal and parallel with the reference plane 30a, and the incident angle θ₄ is defined as negative value when the incident light beam (not shown) is upward.

As shown in FIG. 6, the incident light beams 30 enter the microstructure 22 through the second surface 222 of the microstructure 22 by refraction, and are reflected by the first surface 221 of the microstructure 22. Then, the reflected incident light beams 30 pass through the film base 21 to become the output light beams 31. It is to be noted that the incident light beams 30 are reflected by the first surface 221 due to the specific design of the first inclination angle θ₁ and the second inclination angle θ₂. Therefore, when the incident angles θ₄ of the incident light beams 30 are in the range of 30 to 60 degrees downward, more than 50% of the output light beams 31 are upward. Further, the output light beams 31 will concentrate in a specific range of the output angle θ₃, that is, the total luminous flux of the output light beams 31 with the specific range of the output angle is a peak when it is compared with other output light beams 31 with other range of the output angle.

In one embodiment, the incident angles θ₄ of the incident light beams 30 are from 30 to 60 degrees, and the total luminous flux of the output light beams 31 with the output angles from 85 to 120 degrees is more than 40% of the total luminous flux of the output light beams 31 with the output angles from 0 to 180 degrees.

Referring to FIG. 3 again, the light-shielding element 14 faces the light beam 10. Meanwhile, the light-shielding element 14 shields the ultraviolet (UV) light of the light beam 10, and let other light (e.g., visible light) pass through. Then, a part of said other light (e.g., visible light) is guided upward by the light-guiding film 2 to pass through the discolorable element 12. Since the discolorable element 12 is not illuminated by ultraviolet (UV) light, it is transparent. Therefore, the architectural optical assembly 1b is light-transmissive and has the light-guiding effect. That is, the visible light of the light beam 10 can pass through the light-shielding element 14, the light-guiding film 2 and the discolorable element 12, and reach the right side of the figure. A part of the visible light can reach the upper right side of the figure. In addition, the ultraviolet (UV) light will not reach the right side of the figure (or only less ultraviolet (UV) light reaches the right side of the figure).

In this embodiment, the discolorable element 12, the light-guiding film 2 and the light-shielding element 14 are the films formed individually, and then combined together to form the architectural optical assembly 1b. However, in other embodiment, the light-shielding element 14 is attached to the light-guiding film 2 by, e.g., coating or bonding, to form a single film. Alternatively, the discolorable element 12 may be attached to the light-guiding film 2 by, e.g., coating or bonding, to form a single film.

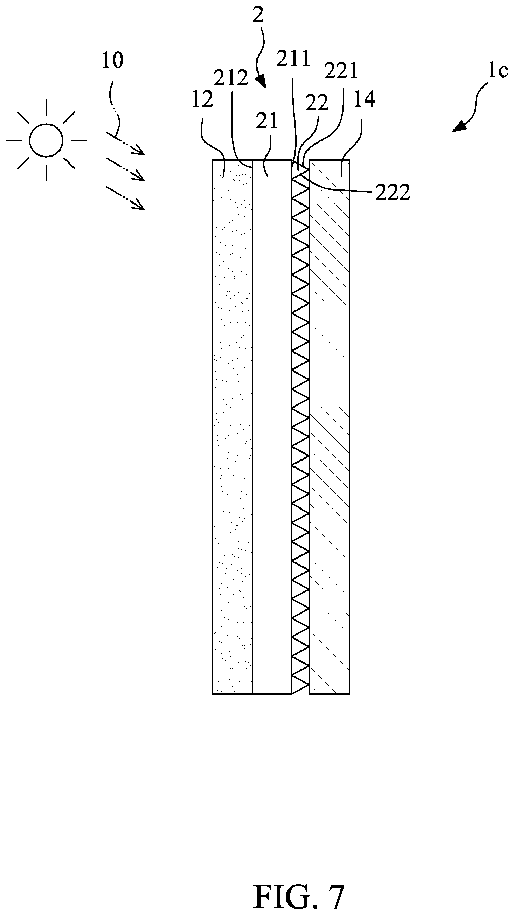

FIG. 7 shows a cross-sectional view of an architectural optical assembly according to another embodiment of the present invention. The architectural optical assembly 1c of this embodiment is similar to the architectural optical assembly 1a of FIG. 2, wherein the same elements are designated with the same reference numerals, and the difference is described as follows. In this embodiment, the architectural optical assembly 1c further comprises the light-guiding film 2 disposed between the discolorable element 12 and the light-shielding element 14.

In this embodiment, the discolorable element 12 of the architectural optical assembly 1c faces the light beam 10. Meanwhile, the discolorable element 12 is illuminated by the ultraviolet (UV) light of the light beam 10, it absorbs the ultraviolet (UV) light to exhibit discoloration effect (becomes dark), so as to block or shield the transmission of other light (e.g., visible light), or block or shield a part of the visible light. Therefore, the architectural optical assembly 1c is opaque. That is, the light beam 10 can not pass through the discolorable element 12, the light-guiding film 2 and the light-shielding element 14 to reach the right side of the figure (or only less light beam 10 reaches the right side of the figure). Meanwhile, the architectural optical assembly 1c has light-shielding effect.

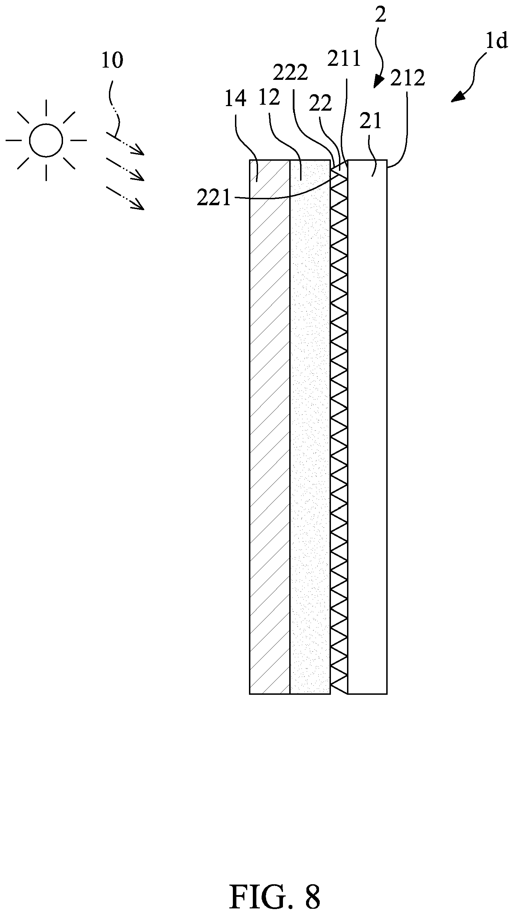

FIG. 8 shows a cross-sectional view of an architectural optical assembly according to another embodiment of the present invention. The architectural optical assembly 1d of this embodiment is similar to the architectural optical assembly 1b of FIG. 3, wherein the same elements are designated with the same reference numerals, and the difference is described as follows. In this embodiment, the discolorable element 12 of the architectural optical assembly 1d is disposed between the light-guiding film 2 and the light-shielding element 14. Therefore, the optical effect of the architectural optical assembly 1d is substantially the same as that of the architectural optical assembly 1b of FIG. 3.

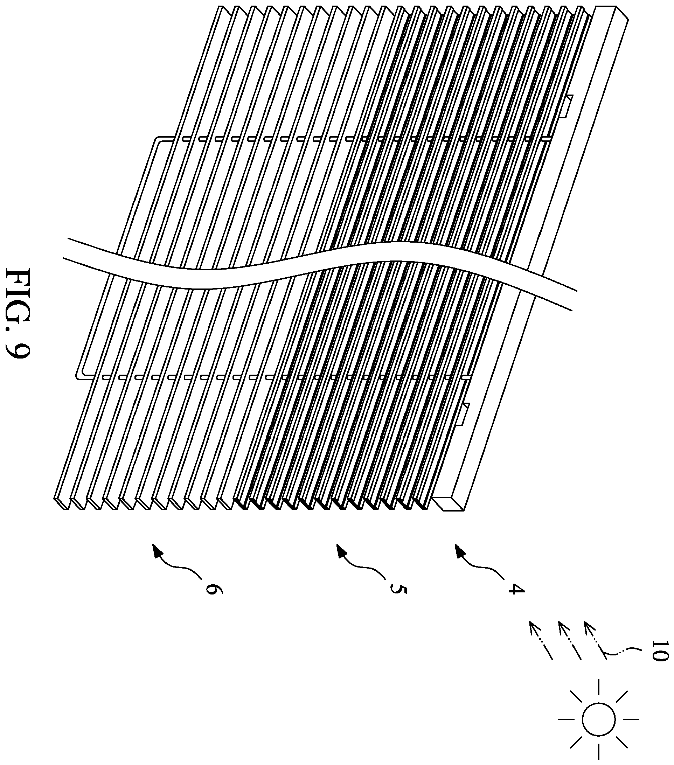

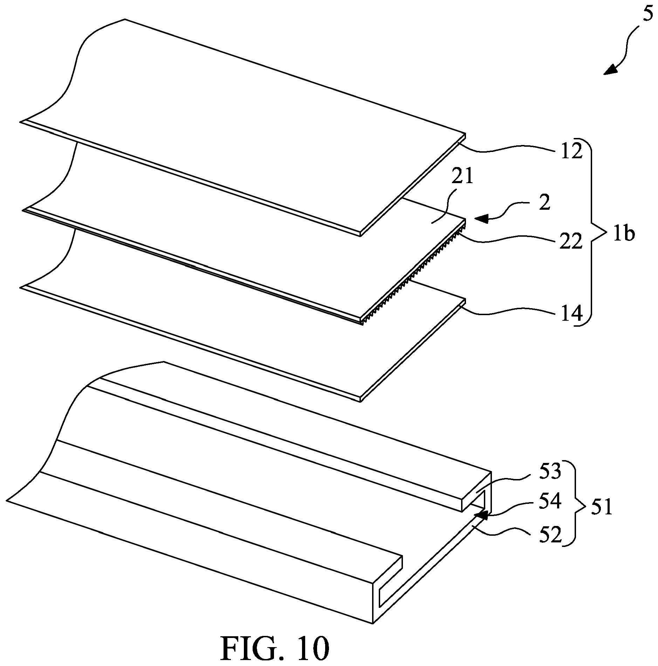

FIG. 9 shows a perspective view of a window shutter apparatus according to an embodiment of the present invention. The window shutter apparatus 4 is used for receiving the light beam 10. The window shutter apparatus 4 comprises a plurality of first plates 5, a plurality of second plates 6 and a controlling apparatus (not shown). In this embodiment, the first plates 5 are different from the second plates 6, and the first plates 5 are disposed above the second plates 6. Each of the first plates 5 comprises a seat 51 and an architectural optical assembly 1b (FIG. 10). The first plates 5 are substantially parallel to each other (that is, the seats 51 are substantially parallel to each other), and are light-transmissive. The second plates 6 are opaque plates (e.g., metal, wood, opaque plastic, etc.) and are parallel to the seats 51. The controlling apparatus is used for controlling the rotation of the seats 51 of the first plates 5 and the second plates 6.

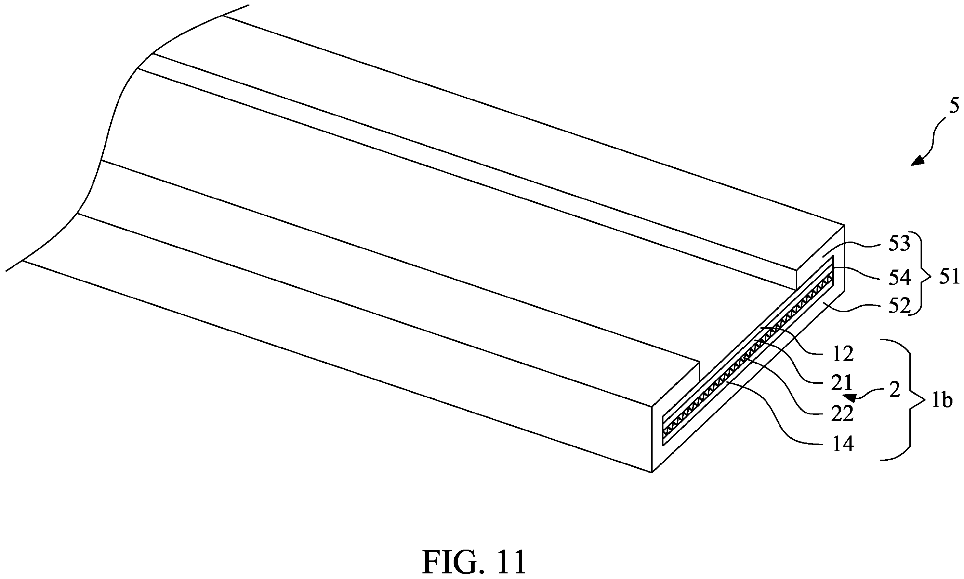

FIG. 10 and 11 respectively show a perspective exploded view and a perspective assembly view of a first plate of a window shutter apparatus according to an embodiment of the present invention. Each of the first plates 5 comprises a seat 51 and an architectural optical assembly 1b (FIG. 10). The seat 51 is used for receiving the architectural optical assembly 1b, and includes a base 52 and two clip plates 53. The clip plates 53 are disposed above two opposite sides of the base 52, and the clip plates 53 and the base 52 define an accommodating space 54. Preferably, the seat 51 is made of transparent plastic, and the clip plates 53 and the base 52 are made integrally.

The architectural optical assembly 1b is disposed on the seat 51. In this embodiment, the architectural optical assembly 1b is inserted in the accommodating space 54 between the clip plates 53 and the base 52, so that the light-shielding element 14 contacts the base 52, and the discolorable element 12 contacts the clip plates 53. In this embodiment, the architectural optical assembly 1b is the architectural optical assembly 1b of FIG. 3. It is understood that the architectural optical assembly 1b may be replaced with the architectural optical assembly 1 of FIG. 1, the architectural optical assembly 1a of FIG. 2, the architectural optical assembly 1c of FIG. 7, or the architectural optical assembly 1d of FIG. 8.

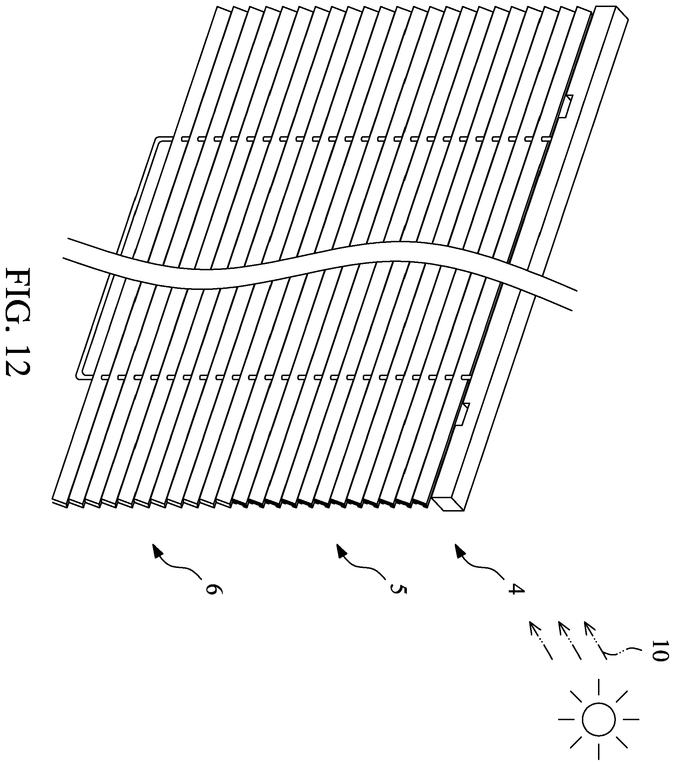

FIG. 12 shows a first operation of the window shutter apparatus of FIG. 9. The figure shows the situation of actual usage of the window shutter apparatus 4, wherein the right side of the figure represents outdoor location, the light beam 10 is the sunlight beam, and the left side of the figure represents indoor location. During operation, the user actuates or starts the controlling apparatus to drive the first plates 5 and the second plates 6 to rotate. As shown in FIG. 12, the first plates 5 and the second plates 6 are driven to rotate to a position perpendicular to the ground, so that the light-shielding elements 14 of the first plates 5 face the light beam 10 (that is, the light-shielding elements 14 face toward the outdoor side), and such situation is similar to FIG. 3. Meanwhile, the light-shielding elements 14 shield the ultraviolet (UV) light of the light beam 10, and let other light (e.g., visible light) pass through. Then, a part of said other light (e.g., visible light) is guided upward by the light-guiding film 2 to pass through the discolorable elements 12. Since the discolorable elements 12 are not illuminated by ultraviolet (UV) light, they are transparent. Therefore, the first plates 5 are light-transmissive and have the light-guiding effect. That is, the visible light of the light beam 10 can pass through the first plates 5, and reach the left side of the figure. A part of the visible light can reach the upper left side of the figure. Further, the ultraviolet (UV) light will not reach the left side of the figure (or only less ultraviolet (UV) light reaches the left side of the figure). In addition, the second plates 6 shield or block the light beam 10 completely. Therefore, in this first operation, the window shutter apparatus 4 exhibits the effect of guiding a part of the light beam 10 to the upper left side of the figure.

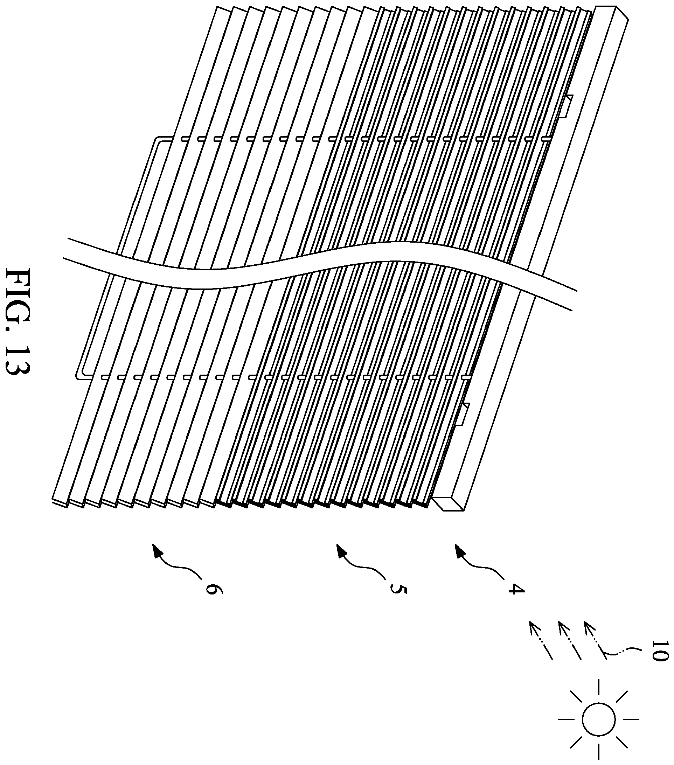

FIG. 13 shows a second operation of the window shutter apparatus of FIG. 9. The user actuates or starts the controlling apparatus to drive the first plates 5 and the second plates 6 to rotate. As shown in FIG. 13, the first plates 5 and the second plates 6 are driven to rotate to a position perpendicular to the ground, so that the discolorable elements 12 of the first plates 5 face the light beam 10 (that is, the discolorable elements 12 face toward the outdoor side), and such situation is similar to FIG. 7. Meanwhile, the discolorable elements 12 are illuminated by the ultraviolet (UV) light of the light beam 10, they absorb the ultraviolet (UV) light to exhibit discoloration effect (become dark), so as to block or shield the transmission of other light (e.g., visible light), or block or shield a part of the visible light. Therefore, the first plates 5 are opaque. That is, the light beam 10 can not pass through the first plates 5 to reach the left side of the figure (or only less light beam 10 reaches the left side of the figure). In addition, the second plates 6 still shield or block the light beam 10 completely. Therefore, in this second operation, the window shutter apparatus 4 exhibits the effect of almost shielding or blocking the whole light beam 10. That is, the window shutter apparatus 4 has the light-shielding effect. Therefore, by changing the angle of the plates (the first plates 5 and the second plates 6), the window shutter apparatus 4 have both light-shielding effect and light-transmitting effect, and can prevent the ultraviolet (UV) light from entering the room.

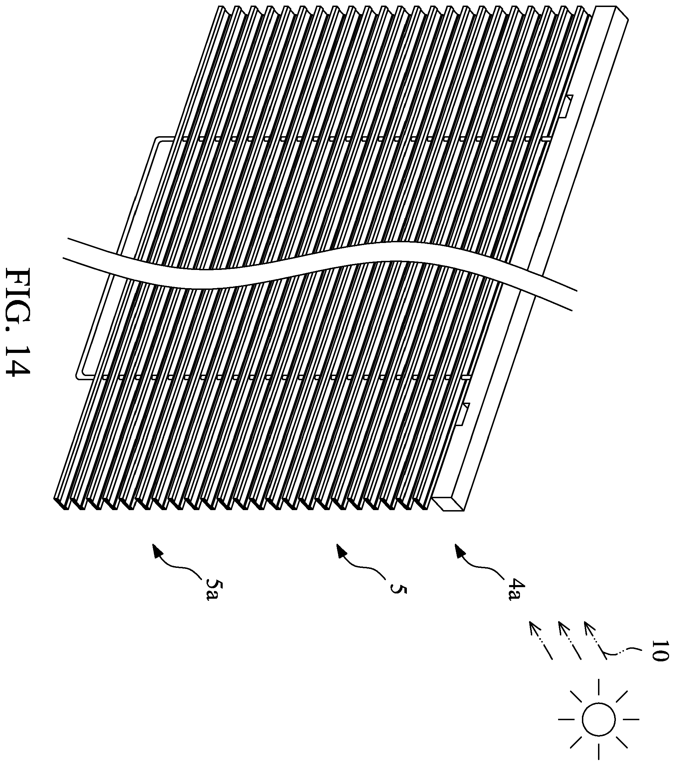

FIG. 14 shows a perspective view of a window shutter apparatus according to another embodiment of the present invention. The window shutter apparatus 4a of this embodiment is similar to the window shutter apparatus 4 of FIG. 9, wherein the same elements are designated with the same reference numerals, and the difference is described as follows. In this embodiment, the window shutter apparatus 4a comprises a plurality of first plates 5, a plurality of second plates 5a and a controlling apparatus (not shown). The first plates 5 of the window shutter apparatus 4a are the same as the first plates 5 of the window shutter apparatus 4 of FIG. 9. Each of the second plates 5a is similar to each of the first plates 5, and has a seat 51 (FIG. 10). However, the architectural optical assembly inserted in each of the second plates 5a may be the same as or different from the architectural optical assembly inserted in each of the first plates 5, and it depends on the actual requirement.

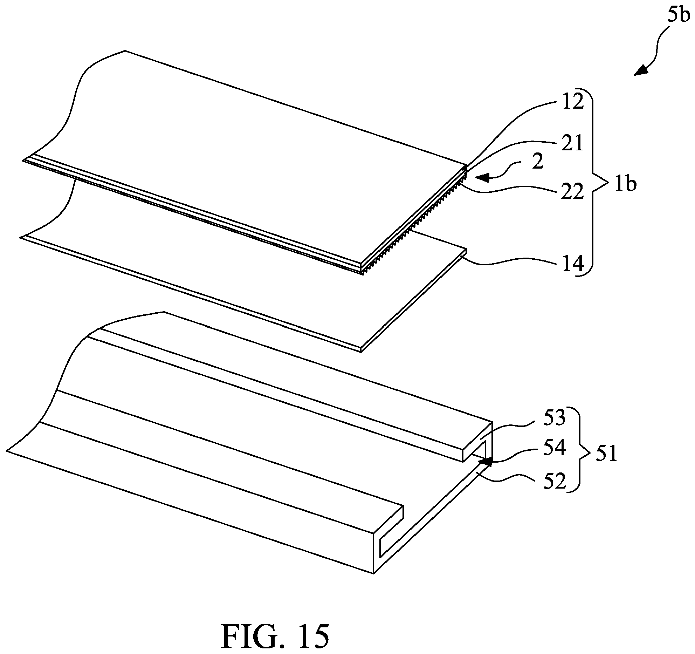

FIG. 15 shows a perspective exploded view a first plate of a window shutter apparatus according to another embodiment of the present invention. The first plate 5b of this embodiment is similar to the first plate 5 of FIG. 10, wherein the same elements are designated with the same reference numerals, and the difference is described as follows. In the first plate 5 of FIG.10, the discolorable element 12, the light-guiding film 2 and the light-shielding element 14 are the films formed individually, and then inserted into the accommodating space 54. However, in the first plate 5b of this embodiment, the discolorable element 12 is attached to the light-guiding film 2 by, e.g., coating or bonding, to form a single film, and then said single film accompanying with the light-shielding element 14 are inserted into the accommodating space 54.

## Claims

1. An architectural optical assembly (1b) used for receiving light beam (10, 30), and comprising:
a discolorable element (12), used for receiving the light beam (10, 30) to exhibit discoloration effect; and
a light-shielding element (14), disposed adjacent to the discolorable element (12) and used for shielding a part of the light beam (10, 30) having a wavelength within a predetermined range; **characterized in that** said assembly further comprises
a light-guiding film (2), wherein the light-guiding film (2) comprises:
a film base (21), having a first side (211) and a second side (212) opposite the first side (211); and
at least one microstructure (22), disposed on the first side (211) or the second side (212) of the film base (21), and having a first surface (221) and a second surface (222) above the first surface (221), wherein a first inclination angle (θ₁) is between the first surface (221) and a reference plane (30a), the reference plane (30a) is perpendicular to the film base (21), a second inclination angle (θ₂) is between the second surface (222) and the reference plane (30a);
whereby a plurality of incident light beams (30) becomes a plurality of output light beams (31) after passing through the light-guiding film (2), an output angle (θ₃) is defined as the angle between the output light beam (31) and the light-guiding film (2), the output angle (θ₃) is defined as 0 degree when the output light beam (31) is downward and parallel with the light-guiding film (2), the output angle (θ₃) is defined as 180 degrees when the output light beam (31) is upward and parallel with the light-guiding film (2), the total luminous flux of the output light beams (31) with the output angles (θ₃) from 85 to 120 degrees is more than 40% of the total luminous flux of the output light beams (31) with the output angles (θ₃) from 0 to 180 degrees.

2. The architectural optical assembly (1b) as claimed in Claim 1, wherein the light beam (10, 30) is the sunlight beam.

3. The architectural optical assembly (1b) as claimed in any of the Claims 1 or 2, wherein the discolorable element (12) is a UV-photochromic film or a thermochromic film.

4. The architectural optical assembly (1b) as claimed in any of the Claims 1 to 3, wherein the light beam (10, 30) further has visible light, and the discolorable element (12) is used for shielding a part of the visible light.

5. The architectural optical assembly (1b) as claimed in any of the Claims 1 to 4, wherein the light beam (10, 30) having a wavelength within a predetermined range is ultraviolet,UV, light.

6. The architectural optical assembly (1b) as claimed in any of the Claims 1 to 5, wherein the light-shielding element (14) shields more than 60% of ultraviolet, UV, light.

7. A window shutter apparatus (4) for receiving light beam (10), and comprising:
a plurality of seats (51);
a plurality of architectural optical assemblies (1b) as claimed in the Claim 1, each of the architectural optical assemblies (1b) being disposed on each of the seats (51)

8. The window shutter apparatus (4) as claimed in Claim 7, wherein each of the seats (51) includes a base (52) and two clip plates (53), and each of the architectural optical assemblies (1b) is inserted between the base (52) and the clip plates (53).

9. The window shutter apparatus (4) as claimed in Claim 7 or 8, wherein the seats (51) are substantially parallel to each other.

10. The window shutter apparatus (4) as claimed in any of the Claims 7 to 9, further comprising a plurality of opaque plates (5) parallel to the seats (51).

11. The window shutter apparatus (4) as claimed in any of the Claims 7 to 10, wherein the seats (51) are light-transmissive.

## Patentansprüche

1. Eine optische Architekturanordnung (1 b), die zum Empfangen eines Lichtstrahls (10, 30) verwendet wird, und umfassend:
Ein verfärbbares Element (12), das zum Empfangen des Lichtstrahls (10, 30) verwendet wird, um einen Verfärbungseffekt zu zeigen; und
Ein Lichtabschirmungselement (14), das benachbart zu dem verfärbbaren Element (12) angeordnet ist und zum Abschirmen eines Teils des Lichtstrahls (10, 30) verwendet wird, mit einer Wellenlänge innerhalb eines vorbestimmten Bereichs;
**dadurch gekennzeichnet, dass** die Anordnung ferner umfasst:
Eine Lichtleitfolie (2), wobei die Lichtleitfolie (2) umfasst:
Eine Folienbasis (21) mit einer ersten Seite (211) und einer zweiten Seite (212) gegenüberliegenden zu der ersten Seite (211); und
mindestens eine Mikrostruktur (22), angeordnet auf der ersten Seite (211) oder der zweiten Seite (212) der Folienbasis (21) und mit einer ersten Oberfläche (221) und einer zweiten Oberfläche (222) oberhalb der ersten Oberfläche (221), wobei ein erster Neigungswinkel (θ₁) zwischen der ersten Oberfläche (221) und einer Bezugsebene (30a) liegt, die Bezugsebene (30a) ist senkrecht zur Folienbasis (21), ein zweiter Neigungswinkel (θ₂) ist zwischen der zweiten Oberfläche (222) und der Bezugsebene (30a);
wobei eine Vielzahl von einfallenden Lichtstrahlen (30) nach Passieren der Lichtleitfolie (2) zu einer Vielzahl von ausgehenden Lichtstrahlen (31) werden, ein Ausgangswinkel (θ₃) ist als der Winkel zwischen den ausgehenden Lichtstrahlen (31) und der Lichtleitfolie (2) definiert, der Ausgangswinkel (θ₃) ist als 0 Grad definiert, wenn der ausgehende Lichtstrahl (31) nach unten und parallel zur Lichtleitfolie (2) ist, der Ausgangswinkel (θ₃) ist definiert als 180 Grad, wenn der ausgehende Lichtstrahl (31) nach oben und parallel zur Lichtleitfolie (2) ist, der Gesamtlichtstrom der ausgehenden Lichtstrahlen (31) mit den Ausgangswinkeln (θ₃) von 85 bis 120 Grad liegt bei mehr als 40% des Gesamtlichtstrom der ausgehenden Lichtstrahlen (31) mit den Ausgangswinkeln (θ₃) von 0 bis 180 Grad.

2. Die optische Architekturanordnung (1b), nach Anspruch 1, wobei der Lichtstrahl (10, 30) der Sonnenlichtstrahl ist.

3. Die optische Architekturanordnung (1b) nach einem der Ansprüche 1 oder 2, wobei das verfärbbare Element (12) eine UV-photochromer Folie oder eine thermochrome Folie ist.

4. Die optische Architekturanordnung (1b) nach einem der Ansprüche 1 bis 3, wobei der Lichtstrahl (10, 30) ferner sichtbares Licht aufweist und das verfärbbare Element (12) zur Abschirmung eines Teils des sichtbaren Lichts verwendet wird.

5. Die optische Architekturanordnung (1b) nach einem der Ansprüche 1 bis 4, wobei der Lichtstrahl (10, 30) mit einer Wellenlänge innerhalb eines vorbestimmten Bereichs ultraviolettes, UV, Licht ist.

6. Die optische Architekturanordnung (1b) nach einem der Ansprüche 1 bis 5, wobei das Lichtabschirmungselement (14) mehr als 60% ultraviolettes, UV, Licht abschirmt.

7. Fensterladenvorrichtung (4) zum Empfangen von Lichtstrahlen (10) und umfassend:
eine Vielzahl von Sitzen (51);
eine Vielzahl von optischen Architekturanordnung (1b) nach Anspruch 1, jede der optischen Architekturanordnungen (1b) sind auf jedem der Sitze (51) angeordnet,

8. Die Fensterladenvorrichtung (4) nach Anspruch 7, wobei jeder der Sitze (51) eine Basis (52) und zwei Klammerplatten (53) aufweist und jede der optischen Architekturanordnungen (1b) zwischen der Basis (52) und den Klammerplatten (53) angeordnet ist.

9. Die Fensterladenvorrichtung (4) nach Anspruch 7 oder 8, wobei die Sitze (51) im Wesentlichen parallel zueinander sind.

10. Die Fensterladenvorrichtung (4) nach einem der Ansprüche 7 bis 9, ferner umfassendeiner Vielzahl von opaken Platten (5) parallel zu den Sitzen (51).

11. Die Fensterladenvorrichtung (4) nach einem der Ansprüche 7 bis 10, wobei die Sitze (51) lichtdurchlässig sind.

## Revendications

1. Un ensemble optique architectural (1b) utilisé pour recevoir un faisceau lumineux, (10, 30) et comprenant:
un élément décolorable (12), utilisé pour recevoir le faisceau lumineux (10, 30) et générer un effet de décoloration; et
un élément de protection contre la lumière (14), disposé adjacent à l'élément décolorable (12) et utilisé pour bloquer une partie du faisceau lumineux (10, 30) ayant une longueur d'onde dans une plage prédéterminée ;
**caractérisé en ce que** l'ensemble comporte en outre :
un film guide de lumière (2), dans lequel le film de guidage de lumière comprenant :
une base de film (21), ayant un premier côté (211) et un second côté (212) opposé au premier côté (211); et
au moins une microstructure (22), disposée sur le premier côté (211) ou le second côté (212) de la base de film, et ayant une première surface (221) et une seconde surface (222) au-dessus de la première surface, dans laquelle un premier angle d'inclinaison (θ1) est défini entre la première surface (221) et un plan de référence (30a), le plan de référence (30a) étant perpendiculaire à la base du film (21), un second angle d'inclinaison (θ2) étant défini entre la seconde surface (222) et le plan de référence (30a);
de sorte qu'une pluralité de faisceaux de lumière incidente (30) devient une pluralité de faisceaux de lumière de sortie (31) après avoir traversé le film guide de lumière (2), un angle de sortie (θ3) étant défini comme l'angle entre le faisceau de lumière de sortie (31) et le film guide de lumière(2), l'angle de sortie (θ3) étant défini à degré lorsque le faisceau de lumière de sortie (31) est vers le bas et parallèle au film guide de lumière (2), l'angle de sortie (θ3) étant défini à 180 degrés lorsque le faisceau lumineux de sortie (31) est vers le haut et parallèle au film guide de lumière (2), le flux lumineux total des faisceaux lumineux de sortie (31) avec les angles de sortie (θ3) entre 85 et 120 degrés représentent plus de 40% du flux lumineux total des faisceaux lumineux de sortie (31) avec les angles de sortie (θ3) de 0 à 180 degrés.

2. L'ensemble optique architectural (1b) tel que revendiqué dans la revendication 1, dans lequel le faisceau lumineux (10, 30) est la lumière du jour.

3. L'ensemble optique architectural (1b) tel que revendiqué dans l'une quelconque des revendications 1 ou 2, dans lequel l'élément décolorable (12) est un film photochromique UV ou un film thermochrome.

4. L'ensemble optique architectural (1b) tel que revendiqué dans l'une quelconque des revendications 1 à 3, dans lequel le faisceau lumineux (10, 30) a en outre une lumière visible, et l'élément décolorable (12) est utilisé pour bloquer une partie de la lumière visible.

5. L'ensemble optique architectural (1b) tel que revendiqué dans l'une quelconque des revendications 1 à 4, dans lequel le faisceau lumineux (10, 30) présente une longueur d'onde dans une plage prédéterminée est une lumière ultraviolette (UV).

6. L'ensemble optique architectural (1b) tel que revendiqué dans l'une quelconque des revendications 1 à 5, dans lequel l'élément de protection contre la lumière (14) bloque plus de 60% de la lumière ultraviolette (UV).

7. Store (4) pour la réception d'un faisceau lumineux (10) et comprenant :
une pluralité de sièges (51) ;
une pluralité d'ensembles optiques architecturaux (1b) tels que revendiqués dans la revendication 1, chaque ensemble optique architectural (1b) étant disposé dans chacun desdits sièges (51).

8. Le store (4) tel que revendiqué dans la revendication 7, dans lequel chacun des sièges (51) comprend une base (52) et deux plaques à clipser (53), et chacun des ensembles optiques architecturaux (1b) est inséré entre la base (52) et les plaques à clipser (53).

9. Le store (4) tel que revendiqué dans les revendications 7 ou 8, dans lequel les sièges (51) sont sensiblement parallèles l'un à l'autre.

10. Le store (4) tel que revendiqué dans l'une quelconque des revendications 8 à 11, comprenant en outre une pluralité de plaques opaques (5) parallèles aux sièges (51).

11. Le store (4) tel que revendiqué dans l'une quelconque des revendications 7 à 10, dans lequel les sièges (51) sont transparents.
